# EUROPÄISCHE PATENTSCHRIFT

(11) **EP 1 927 780 B1**
(45) Veröffentlichungstag und Bekanntmachung des Hinweises auf die Patenterteilung: **02.02.2011**
(21) Anmeldenummer: 07017822.3
(22) Anmeldetag: 12.09.2007
(51) Int. Cl.: F16D 65/32

(54) **Druckluftbremszylinder in Kolbenbauweise**
Compressed air brake cylinder with piston arrangement
Cylindre à air comprimé avec arrangement de piston

(30) Priorität: 30.11.2006 DE 102006056710
(43) Veröffentlichungstag der Anmeldung: 04.06.2008
(73) Patentinhaber: WABCO GmbH, 30432 Hannover (DE)
(72) Erfinder: Ewald, Jürgen, 30880 Laatzen (DE); Matthias, Wilfried, 31542 Bad Nenndorf (DE); Schrader, Frank, 30916 Isernhagen (DE)
(74) Vertreter: Günther, Constantin

(56) Entgegenhaltungen:
- EP-B- 0 949 433
- DE-A1-102005 001 234

## Beschreibung

Die Erfindung betrifft einen Druckluftbremszylinder in Kolbenbauweise gemäß dem Oberbegriff des Patentanspruchs 1.

Ein Druckluftbremszylinder ist aus der EP 0 949 433 B1 bekannt.

Dieser Druckluftbremszylinder ist mit einer Scheibenbremse verbunden, die zur Bremsbetätigung einen Zuspannhebel aufweist. Bei einer Betätigung des Druckluftbremszylinders wird über eine Kolbenstange des Druckluftbremszylinders der Zuspannhebel verschwenkt. Dabei beschreibt das Ende des Zuspannhebels eine Kurve. Hierdurch wird bei der Betätigung des Zuspannhebels eine Querkraft auf die Kolbenstange ausgeübt. Insbesondere bei voll betätigtem Druckluftbremszylinder und somit weit ausgefahrener Kolbenstange kann der Kolben des Druckluftbremszylinders zum Verkippen neigen und dadurch eine erhöhte Reibung an den Gehäusewandungen des Druckluftbremszylinders erzeugen.

Die DE 10 2005 001 234 A1 offenbart einen Druckluftbremszylinder gemäß dem Oberbegriff des Anspruchs 1.

Der Erfindung liegt die Aufgabe zugrunde, die Verkippneigung und damit die Reibung des Kolbens zu verringern.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, auf einfache und kostengünstige Weise und mit geringem konstruktiven Aufwand das Ansprechverhalten und die Regelbarkeit eines Druckluftbremszylinders in Kolbenbauweise zu verbessern, indem eine reibungsbedingte Hysterese vermieden oder zumindest deutlich verringert wird.

Die Erfindung kann in unterschiedlichen Ausgestaltungen ausgeführt werden, wie in den nachfolgend beschriebenen Ausführungsbeispielen erläutert. Gemeinsam ist diesen Ausführungsbeispielen, dass zur Lösung der der Erfindung zugrunde liegenden Aufgabe der Kolben auf der der Öffnung des Gehäuses abgewandten Seite in einem Lager axial geführt ist. Hierdurch wird eine deutliche Verringerung der Verkippneigung des Kolbens in allen Betätigungszuständen des Druckluftbremszylinders, d. h. auch bei Vollbetätigung, gewährleistet.

Die Erfindung wird nachfolgend anhand von Ausführungsbeispielen unter Verwendung von Zeichnungen näher erläutert.

Es zeigen:
- Fig. 1: eine erste Ausführungsform des erfindungsgemäßen Druckluftbremszylinders im unbetätigten Zustand in Schnittdarstellung und
- Fig. 2: den Druckluftbremszylinder gemäß Fig. 1 im betätigten Zustand und
- Fig. 3: eine zweite Ausführungsform des erfindungsgemäßen Druckluftbremszylinders im unbetätigten Zustand und
- Fig. 4: eine dritte Ausführungsform des erfindungsgemäßen Druckluftbremszylinders im unbetätigten Zustand und
- Fig. 5: eine vierte Ausführungsform des erfindungsgemäßen Druckluftbremszylinders mit zusätzlicher Parkbremsfunktion im unbetätigten Zustand und
- Fig. 6: den Druckluftbremszylinder gemäß Fig. 5 im betätigten Zustand und
- Fig. 7: den Druckluftbremszylinder gemäß Fig. 5 mit betätigter Parkbremsfunktion.

In den Figuren werden für einander entsprechende Teile gleiche Bezugszeichen verwendet.

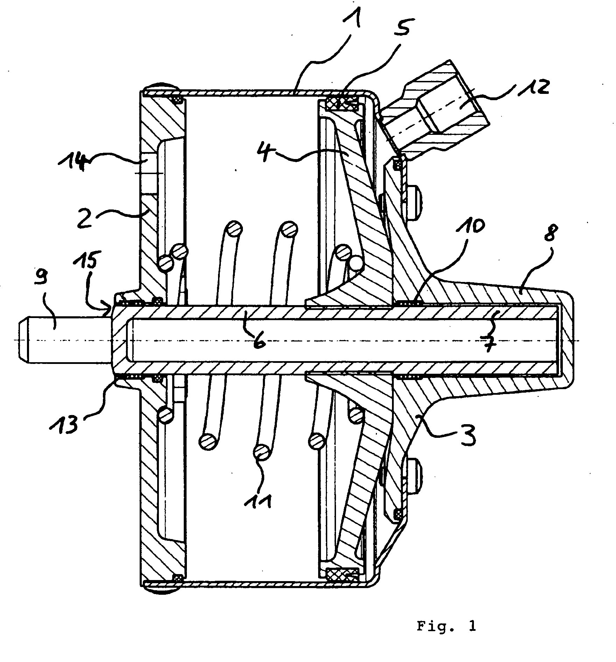

Der Druckluftbremszylinder gemäß Fig. 1 weist ein Gehäuse (1, 2, 3) auf, das ein im wesentlichen zylindrisches Korpusteil (1), eine Frontwand (2) sowie eine Rückwand (3) aufweist. Im Inneren des Gehäuses ist ein durch Druckluftbeaufschlagung längsverschieblicher Kolben (4) angeordnet, der gegenüber dem Gehäuseteil (1) mittels einer umlaufenden Dichtung (5) abgedichtet ist. Der Kolben (4) ist starr mit einer Kolbenstange (6) verbunden. Die Kolbenstange (6) ragt durch eine Öffnung (15) des Gehäuses (1, 2, 3), nämlich die Öffnung (15) der Frontwand (2). An seinem Frontwand-seitigen Ende weist die Kolbenstange (6) eine Betätigungsfläche auf, die zur Betätigung des Zuspannhebels einer Scheibenbremse dient. Hierzu wird der Druckluftbremszylinder mit seiner Frontwand (2) mittels Bolzen (9) an dem Gehäuse einer Scheibenbremse befestigt. Dabei kommt die Betätigungsfläche mit dem Zuspannhebel der Scheibenbremse zur Anlage.

Gemäß einer vorteilhaften Ausgestaltung der Erfindung ist die Kolbenstange (6) im Bereich der Öffnung (15) in einem Lager (13) axial gelagert, dass heißt bezüglich der Längsbewegung der Kolbenstange (6). Das Lager (13) weist vorteilhaft auch eine Dichtfunktion auf. Hierfür kann das Lager (13) vorteilhaft als PUR-Ring ausgebildet sein.

Zur Betätigung des Druckluftbremszylinders kann der Kolben (4) über einen Druckluftanschluss (12) mit Druckluft beaufschlagt werden. Bei Druckluftbeaufschlagung - bewegt sich der Kolben (4) entgegen der Kraft einer Rückstellfeder (11) in Richtung der Frontwand (2). Die Frontwand (2) weist hierzu zum Druckausgleich eine Öffnung (14) auf, die mit der Atmosphäre oder einem Ausgleichsvolumen verbunden ist.

Gemäß der vorliegenden Erfindung ist der Kolben oder ein mit dem Kolben starr verbundenes Teil auf der der Öffnung (15) abgewandten Seite mit einem Fortsatz (7) verbunden. Der Fortsatz (7) ist in einem Lager (10) axial geführt. In der Ausführungsform gemäß Fig. 1 ist der Fortsatz (7) dabei als eine den Kolben (4) durchdringende Verlängerung der Kolbenstange (6) ausgebildet. Der Fortsatz (7) ist dabei zumindest in bestimmten Betätigungszuständen des Druckluftbremszylinders, zum Beispiel in dem in Fig. 1 dargestellten unbetätigten Zustand, in einem Verlängerungsbereich (8) des Gehäuses (1, 2, 3) aufgenommen. Gemäß einer vorteilhaften Ausgestaltung der Erfindung ist der Verlängerungsbereich (8) in der Ausführungsform gemäß Fig. 1 als Teil der Rückwand (3) ausgebildet.

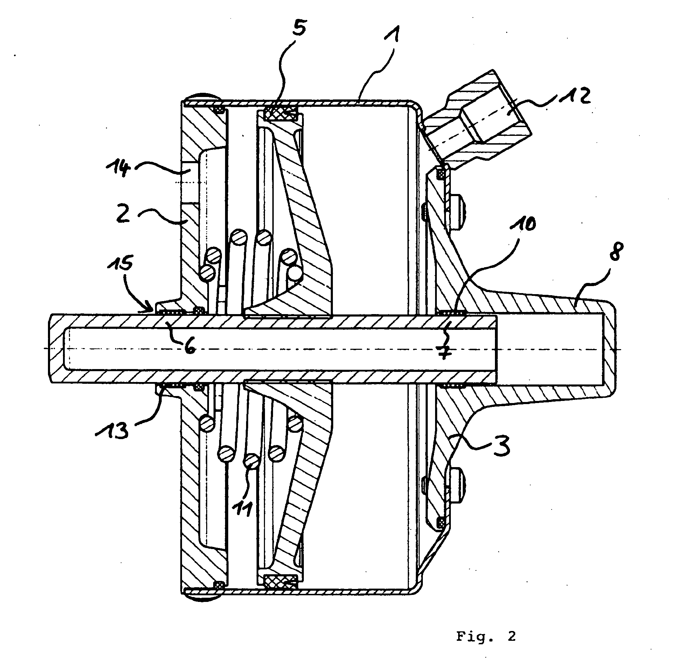

Die Fig. 2 zeigt den Druckluftbremszylinder gemäß Fig. 1 im betätigten Zustand, dass heißt bei einer Druckluftbeaufschlagung des Kolbens (4) durch den Druckluftanschluss (12).

Gemäß einer vorteilhaften Ausgestaltung der Erfindung ist der Fortsatz (7) zumindest in bestimmten Betätigungszuständen des Druckluftbremszylinders in dem Verlängerungsbereich (8) aufgenommen, z.B. in dem aus Fig. 1 ersichtlichen unbetätigten Zustand des Druckluftbremszylinders. In dem aus Fig. 2 ersichtlichen betätigten Zustand des Druckluftbremszylinders ist der Fortsatz (7) im wesentlichen aus dem Verlängerungsbereich (8) herausgewandert, wobei der Fortsatz (7) selbstverständlich in allen Betätigungszuständen des Druckluftbremszylinders durch das Lager (10) geführt wird.

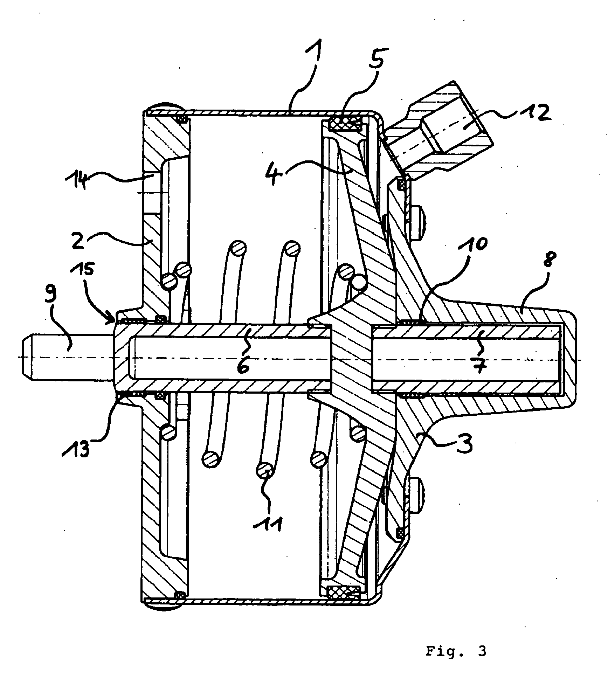

Die Fig. 3 zeigt eine vorteilhafte Ausführungsform der Erfindung, bei der der Fortsatz (7) als Teil des Kolbens (4) ausgebildet ist. Der Fortsatz (7) kann dabei vorteilhaft als separates Teil mit dem Kolben (4) verbunden sein, zum Beispiel durch eine Gewinde-Schraubverbindung, oder auch vorteilhaft einstückig mit dem Kolben (4) ausgebildet sein.

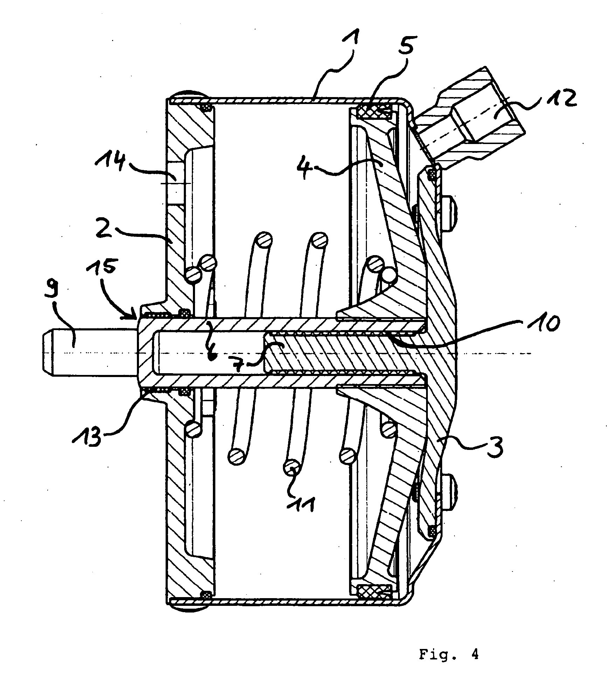

Die Fig. 4 zeigt eine weitere vorteilhafte Ausgestaltung des Druckluftbremszylinders, bei dem der Fortsatz (7) starr mit der Rückwand (3) verbunden ist und in das Innere der Kolbenstange (6) hineinragt. Das Lager (10) ist dabei fest mit der Kolbenstange (6) verbunden und bewegt sich bei einer Betätigung des Kolbens (4) relativ zu dem Fortsatz (7). Wie aus Fig. 4 erkennbar ist, hat diese Ausführungsform den Vorteil, besonders kleinbauend zu sein und insbesondere an der Rückseite des Druckluftbremszylinder wenig Bauraum zu beanspruchen.

Die Lager (10, 13) können vorteilhaft als Axial-Lager ausgebildet sein.

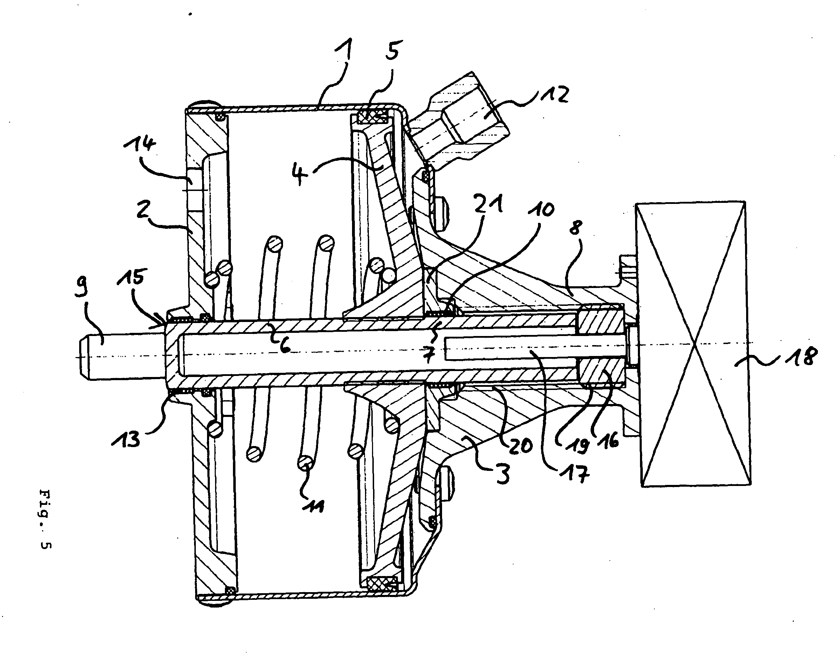

In der Fig. 5 ist eine vorteilhafte Weiterbildung des Druckluftbremszylinders dargestellt, welcher eine Parkbremsfunktion aufweist. Die Parkbremsfunktion weist dabei vorteilhaft eine Einheit zur mechanischen Verriegelung des Kolbens (4) in seiner betätigten Stellung auf.

In dem Ausführungsbeispiel gemäß Fig. 5 sind die dargestellten Elemente der Parkbremsfunktion an der der Frontwand (2) abgewandten Seite des Druckluftbremszylinders angeordnet. Die Elemente der Parkbremsfunktion weisen ein mit einem Außengewinde (20) versehenes Verriegelungselement (16), einen Antriebsbolzen (17) und einen Antrieb (18) auf. Der Antrieb (18) ist geeignet, den Antriebsbolzen (17) in eine Drehbewegung zu versetzen. Der Antriebsbolzen (17), der beispielsweise ein Außenvierkantprofil aufweist, überträgt die Drehbewegung auf das Verriegelungselement (16), das in Folge der Drehbewegung eine Axialbewegung bezüglich des Antriebsbolzen (17) ausführt. Die Axialbewegung wird dabei durch das Außengewinde (20) bewirkt, das in einem in dem Verlängerungsbereich (8) vorgesehenen Innengewinde (19) läuft. Für die Axialbewegung des Verriegelungselements (16) ist es allerdings erforderlich, dass der Kolben (4) zuvor durch die Druckluft betätigt worden ist.

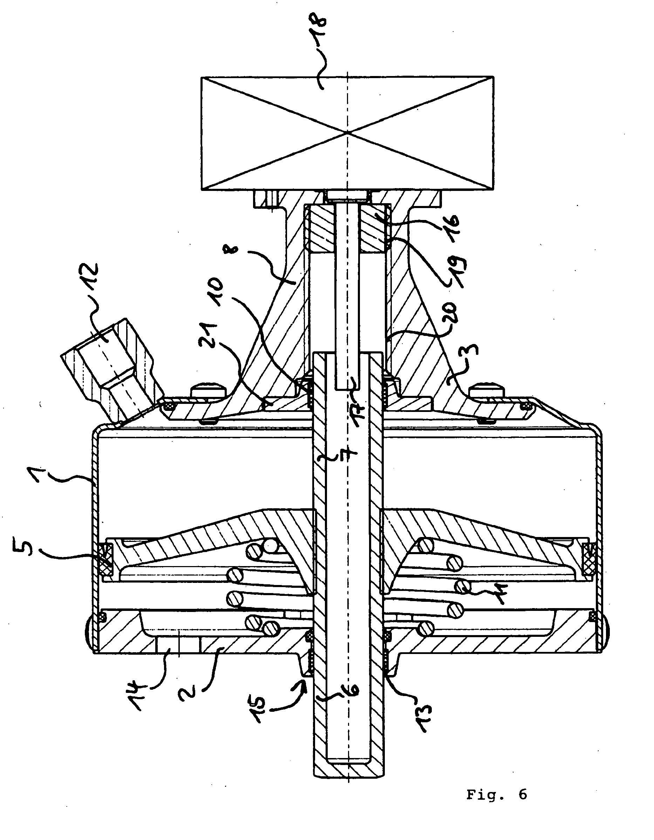

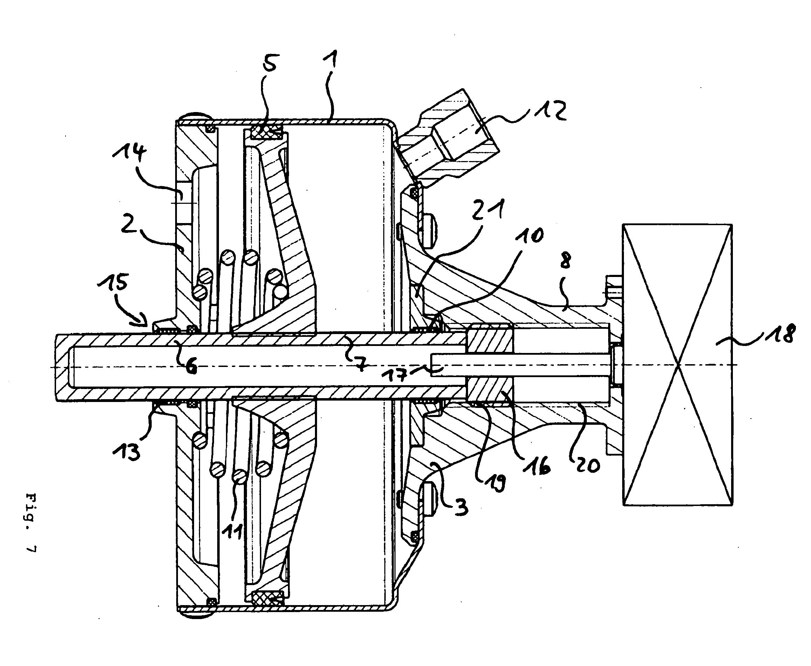

In der Fig. 6 ist die Ausführungsform des Druckluftbremszylinders gemäß Fig. 5 dargestellt, wobei der Kolben (4) hier durch Druckluft betätigt ist. Die Parkbremsfunktion ist in der Darstellung gemäß Fig. 6 nicht betätigt. In der Fig. 7 ist der Druckluftbremszylinder gemäß Fig. 6 mit betätigter Parkbremsfunktion dargestellt. Hierfür ist das Verriegelungselement (16) in Folge einer Betätigung des Antriebs (18) axial in Richtung des Fortsatzes (7) bewegt worden, bis das Verriegelungselement (16) an dem Fortsatz (7) anliegt und eine zurückgerichtete Bewegung des Kolbens (4) hierdurch verhindert. Hierdurch kann eine Betätigung der Bremse aufrechterhalten werden, ohne dass die Druckluft-Betätigung des Kolbens (4) erforderlich ist.

In den Ausführungen gemäß den Fig. 5 bis 7 ist das Lager (10) zur Vereinfachung der Montage in einem Einsatz (21) angeordnet, der zusammen mit dem Lager (10) montierbar ist.

Der Antrieb (18) kann beispielsweise als ein Elektromotor mit Getriebe ausgebildet sein. Weiterhin sind auch die in der Patentanmeldung DE 10 2005 001 234 A1 angegebenen Antriebe bei dem vorliegenden Druckluftbremszylinder vorteilhaft einsetzbar.

## Patentansprüche

1. Druckluftbremszylinder in Kolbenbauweise zur Betätigung einer Scheibenbremse, mit einem Gehäuse (1, 2, 3) und einem in dem Gehäuse (1, 2, 3) beweglichen, mit Druckluft beaufschlagbaren Kolben (4), der zur Betätigung der Scheibenbremse mit einer durch eine Öffnung (15) des Gehäuses (1, 2, 3) geführten Kolbenstange (6) verbunden ist, wobei der Kolben (4) oder ein mit dem Kolben (4) starr verbundenes Teil auf der der Öffnung (15) abgewandten Seite des Kolbens (4) mit einem Fortsatz (7) verbunden ist, der eine axiale Führung des Kolbens (4) bewirkt, **dadurch gekennzeichnet, dass** zur axialen Führung ein Axial-Lager (10) vorgesehen ist.

2. Druckluftbremszylinder nach Anspruch 1, **dadurch gekennzeichnet, dass** der Fortsatz (7) mit der Kolbenstange (6) starr verbunden ist.

3. Druckluftbremszylinder wenigstens einem der vorhergehenden Ansprüche, **dadurch gekennzeichnet, dass** der Fortsatz (7) in dem Axial-Lager (10) geführt ist.

4. Druckluftbremszylinder nach Anspruch 1, **dadurch gekennzeichnet, dass** der Fortsatz (7) mit der der Öffnung (15) abgewandten Seite (3) des Gehäuses (1, 2, 3) starr verbunden ist.

5. Druckluftbremszylinder nach Anspruch 4, **dadurch gekennzeichnet, dass** der Kolben (4) oder ein mit dem Kolben (4) starr verbundenes Teil gegenüber dem Fortsatz (7) in dem Axial-Lager (10) geführt ist.

6. Druckluftbremszylinder nach wenigstens einem der Ansprüche 1 bis 3, **dadurch gekennzeichnet, dass** der Fortsatz (7) als Verlängerung der Kolbenstange (6) ausgebildet ist.

7. Druckluftbremszylinder nach wenigstens einem der vorhergehenden Ansprüche, **dadurch gekennzeichnet, dass** die Kolbenstange (6) auf der der Öffnung (15) zugewandten Seite des Kolbens (4) in einem weiteren Lager (13) axial geführt ist.

8. Druckluftbremszylinder nach wenigstens einem der vorhergehenden Ansprüche, **dadurch gekennzeichnet, dass** das Gehäuse (1, 2, 3) auf der der Öffnung (15) abgewandten Seite des Kolben (4) einen Verlängerungsbereich (8) aufweist, in dem der Fortsatz (7) zumindest in bestimmten Betätigungszuständen des Druckluftbremszylinders aufgenommen ist.

9. Druckluftbremszylinder nach wenigstens einem der vorhergehenden Ansprüche, **gekennzeichnet durch** eine Parkbremsfunktion.

10. Druckluftbremszylinder nach Anspruch 9, **dadurch gekennzeichnet, dass** die Parkbremsfunktion ein Verriegelungselement (16) aufweist, mittels dessen der Druckluftbremszylinder im betätigten Zustand verriegelbar ist.

11. Bremsenzuspannvorrichtung zum Zuspannen einer Scheibenbremse, mit einem auf einen Zuspannmechanismus wirkenden Zuspannhebel sowie mit einem Druckluftbremszylinder nach wenigstens einem der vorhergehenden Ansprüche, wobei die Kolbenstange (6) auf den Zuspannhebel einwirkt.

## Claims

1. Compressed air brake cylinder of piston-type design for actuating a disc brake, having a housing (1, 2, 3) and having a piston (4) which is movable in the housing (1, 2, 3) and which can be acted on with compressed air and which, to actuate the disc brake, is connected to a piston rod (6) guided through an opening (15) of the housing (1, 2, 3), with the piston (4) or a part which is rigidly connected to the piston (4) being connected, on that side of the piston (4) which faces away from the opening (15), to a projection (7) which serves to provide axial guidance of the piston (4), **characterized in that** an axial bearing (10) is provided for the axial guidance.

2. Compressed air brake cylinder according to Claim 1, **characterized in that** the projection (7) is rigidly connected to the piston rod (6).

3. Compressed air brake cylinder according to at least one of the preceding claims, **characterized in that** the projection (7) is guided in the axial bearing (10).

4. Compressed air brake cylinder according to Claim 1, **characterized in that** the projection (7) is rigidly connected to that side (3) of the housing (1, 2, 3) which faces away from the opening (15).

5. Compressed air brake cylinder according to Claim 4, **characterized in that** the piston (4) or a part rigidly connected to the piston (4) is guided opposite the projection (7) in the axial bearing (10).

6. Compressed air brake cylinder according to at least one of Claims 1 to 3, **characterized in that** the projection (7) is formed as an elongation of the piston rod (6).

7. Compressed air brake cylinder according to at least one of the preceding claims, **characterized in that** the piston rod (6) is guided axially, on that side of the piston (4) which faces towards the opening (15), in a further bearing (13).

8. Compressed air brake cylinder according to at least one of the preceding claims, **characterized in that** the housing (1, 2, 3) has, on that side of the piston (4) which faces away from the opening (15), an elongation region (8) in which the projection (7) is held at least in certain actuation states of the compressed air brake cylinder.

9. Compressed air brake cylinder according to at least one of the preceding claims, **characterized by** a parking brake function.

10. Compressed air brake cylinder according to Claim 9, **characterized in that** the parking brake function has a locking element (16), by means of which the compressed air brake cylinder can be locked in the actuated state.

11. Brake application device for applying a disc brake, having an application lever which acts on an application mechanism, and having a compressed air brake cylinder according to at least one of the preceding claims, with the piston rod (6) acting on the application lever.

## Revendications

1. Cylindre de frein à air comprimé à agencement de piston pour l'actionnement d'un frein à disque, comprenant un boîtier (1, 2, 3) et un piston (4) déplaçable dans le boîtier (1, 2, 3), pouvant être sollicité avec de l'air comprimé, qui est connecté en vue de l'actionnement du frein à disque à une tige de piston (6) guidée à travers une ouverture (15) du boîtier (1, 2, 3), le piston (4) ou une pièce connectée rigidement au piston (4) étant connectée du côté du piston (4) opposé à l'ouverture (15) à une saillie (7) qui crée un guidage axial du piston (4), **caractérisé en ce que** l'on prévoit un palier axial (10) pour le guidage axial.

2. Cylindre de frein à air comprimé selon la revendication 1, **caractérisé en ce que** la saillie (7) est connectée rigidement à la tige de piston (6).

3. Cylindre de frein à air comprimé selon au moins l'une quelconque des revendications précédentes, **caractérisé en ce que** la saillie (7) est guidée dans le palier axial (10).

4. Cylindre de frein à air comprimé selon la revendication 1, **caractérisé en ce que** la saillie (7) est connectée rigidement au côté (3) du boîtier (1, 2, 3) opposé à l'ouverture (15).

5. Cylindre de frein à air comprimé selon la revendication 4, **caractérisé en ce que** le piston (4) ou une pièce connectée rigidement au piston (4) est guidé(e) dans le palier axial (10) à l'opposé de la saillie (7).

6. Cylindre de frein à air comprimé selon au moins l'une quelconque des revendications 1 à 3, **caractérisé en ce que** la saillie (7) est réalisée sous forme de prolongement de la tige de piston (6).

7. Cylindre de frein à air comprimé selon au moins l'une quelconque des revendications précédentes, **caractérisé en ce que** la tige de piston (6) est guidée axialement dans un autre palier (13) du côté du piston (4) tourné vers l'ouverture (15).

8. Cylindre de frein à air comprimé selon au moins l'une quelconque des revendications précédentes, **caractérisé en ce que** le boîtier (1, 2, 3) présente, du côté du piston (4) opposé à l'ouverture (15), une région de prolongement (8) dans laquelle est reçue la saillie (7) au moins dans des états d'actionnement déterminés du cylindre de frein à air comprimé.

9. Cylindre de frein à air comprimé selon au moins l'une quelconque des revendications précédentes, **caractérisé par** une fonction de frein de stationnement.

10. Cylindre de frein à air comprimé selon la revendication 9, **caractérisé en ce que** la fonction de frein de stationnement présente un élément de verrouillage (16) au moyen duquel le cylindre de frein à air comprimé peut être verrouillé dans l'état actionné.

11. Cylindre de frein à air comprimé pour serrer un frein à disque, comprenant un levier de serrage agissant sur un mécanisme de serrage, ainsi qu'un cylindre de frein à air comprimé selon au moins l'une quelconque des revendications précédentes, la tige de piston (6) agissant sur le levier de serrage.
